(19)

Europäisches
Patentamt
European
Patent Office
Office européen
des brevets

(11)  **EP 4 372 615 A1**

(12)  # EUROPEAN PATENT APPLICATION

(43) Date of publication:
**22.05.2024 Bulletin 2024/21**

(21) Application number: **22207703.4**

(22) Date of filing: **16.11.2022**

(51) International Patent Classification (IPC):
**G06N 3/0442** (2023.01)     **G06N 3/092** (2023.01)

(52) Cooperative Patent Classification (CPC):
**G06N 3/0442; B60W 30/18163; G06N 3/092;
G08G 1/0112; G08G 1/0133; G08G 1/0145;
G08G 1/167**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Aptiv Technologies AG
8200 Schaffhausen (CH)**

(72) Inventors:
• **Nowak, Mariusz Karol
  40-145 Katowice (PL)**
• **Orlowski, Mateusz
  30-817 Kraków (PL)**

(74) Representative: **Manitz Finsterwald
Patent- und Rechtsanwaltspartnerschaft mbB
Martin-Greif-Strasse 1
80336 München (DE)**

(54)  **METHODS AND SYSTEMS FOR DETERMINING CONTROL DECISIONS FOR A VEHICLE**

(57)     A computer implemented method for determining control decisions for a vehicle comprises the following steps carried out by computer hardware components: acquiring sensor data; processing the acquired sensor data to determine one or more control decisions; wherein determining the one or more control decisions comprises: determining a probability distribution over a discrete action space based on the processing of the acquired sensor data and an accumulator value, wherein the accumulator value is indicative of control decisions taken in the past; sampling the probability distribution; and determining the control decision based on the sampling; wherein the accumulator value is updated based on the probability distribution and/or the determined control decision.

**EP 4 372 615 A1**

**Description**

FIELD

The present disclosure relates to methods and systems for determining control decisions for a vehicle.

BACKGROUND

Providing agents that take decisions in a discrete action space may be important in various fields, for example for at least partially autonomously driving vehicles. However, it may be cumbersome to provide agents that reliably take actions while at the same time do not appear jittery.

Accordingly, there is a need to provide enhanced methods and systems for determining functionality of a vehicle by determining control decisions.

SUMMARY

The present disclosure provides a computer implemented method, a computer system and a non-transitory computer readable medium according to the independent claims. Embodiments are given in the subclaims, the description and the drawings.

In one aspect, the present disclosure is directed at a computer implemented method for determining control decisions for a vehicle, the method comprising the following steps performed (in other words: carried out) by computer hardware components: acquiring sensor data; processing the acquired sensor data to determine one or more control decisions; wherein determining the one or more control decisions comprises: determining a probability distribution over a discrete action space based on the processing of the acquired sensor data and an accumulator value, wherein the accumulator value is indicative of control decisions taken in the past; sampling the probability distribution; and determining the control decision based on the sampling; wherein the accumulator value is updated based on the probability distribution and/or the determined control decision.

The method may be carried out for a present time step, and may use an accumulator value that was updated in a previous time step. In the course of carrying out the method for the present time step, the accumulator value may be used and may then be updated for use in a subsequent time step.

In other words, a control decision is taken based on an processing of sensor data and based on an accumulator value. Illustratively, the accumulator value resembles a history of decisions taken in the past, in order to avoid jittering. Jittering may be understood as taking contrary decisions in quick succession.

Sampling may refer to evaluating the probability distribution in the sense of determining one of the elements of the discrete action space. This determining may be carried out stochastically or non-deterministically. Sampling may refer to determining one of the elements of the discrete action space according to the probability provided by the probability distribution. For example, in a case where the probability distribution provides probabilities of 10% for an element A of the discrete action space, 20% for an element B of the discrete action space, and 70% for an element C of the discrete action space, sampling provides a decision for element A with a probability of 10%, for element B with 20%, and for element C with 70%; and implementation may provide a random number between 0 and 1, and depending on the value of the random number, the element may be determined (for example, if the random number is below 10%, determine element A; if the random number is equal to or higher than 10% but below 30%, determine element B; otherwise determine element C).

The accumulator value may also be indicative of the processing of the acquired sensor data (in a present time step and/or in previous time steps).

According to various embodiments, a parametrizable model head may be provided which enables stable decision making in 1 D (one dimension) or in a multi-dimensional discrete action space.

According to an embodiment, the discrete action space comprises a set of possible actions to be taken by the vehicle.

According to an embodiment, the set of possible actions comprises a change lane to left action, a change lane to right action, and a hold lane action. The "hold lane" action may be a standard action, so that if no action regarding a lane change is taken, the default action is taken.

According to an embodiment, the control decision comprises a binary decision. Binary decision may mean a decision between a defined action (for example "change lane") and a standard action (or default action; for example "hold lane").

According to an embodiment, the control decision comprises a decision with more than two options. The more than two options may include a default action (for example "hold lane") and at least two other actions (for example "change lane to left" and "change lane to right").

According to an embodiment, the accumulator value is reset if a pre-determined decision is taken. According to an embodiment, the accumulator value is reset if any decision is taken. The resetting may be provided by updating the accumulator according to a mathematical equation, which takes information about the decision that is taken as an input.

According to an embodiment, the acquired sensor data are processed to determine one or more control decisions using an artificial neural network, and the accumulator value is updated using the artificial neural network. While the output of the artificial neural network which operates on the sensor data may not depend on the accumulator value, the accumulator value may be updated based on the output of the artificial neural network.

According to an embodiment, the acquired sensor data are processed to determine one or more control decisions using an artificial neural network, and the accumulator value is updated outside the artificial neural network.

According to an embodiment, the accumulator value is updated in a two-stage approach, wherein a first stage of updating the accumulator value is carried out before determining the decision, and wherein a second stage of updating the accumulator value is carried out after determining the decision. This may allow for an efficient handling of the accumulator value update.

According to an embodiment, the accumulator value is updated based on determining at least one accumulator value for a pre-determined time step based on the at least one accumulator value for a time step before the pre-determined time step and based on the probability distribution. This may allow to provide a history to the accumulator value, so that illustratively speaking, a decision which has just been taken at a time step is not immediately revoked or reversed in the next time step, in order to avoid jittering.

According to an embodiment, the control decisions are related to functionality of an advanced driver-assistance system of the vehicle.

In another aspect, the present disclosure is directed at a computer system, said computer system comprising a plurality of computer hardware components configured to carry out several or all steps of the computer implemented method described herein.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a vehicle comprising the computer system as described herein and a sensor configured to generate the sensor data.

In another aspect, the present disclosure is directed at a non-transitory computer readable medium comprising instructions which, when executed by a computer, cause the computer to carry out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

DRAWINGS

Exemplary embodiments and functions of the present disclosure are described herein in conjunction with the following drawings, showing schematically:

Fig. 1    an illustration of updating an accumulator according to various embodiments;

Fig. 2    a flow diagram illustrating a method for determining control decisions for a vehicle according to various embodiments; and

Fig. 3    a computer system with a plurality of computer hardware components configured to carry out steps of a computer implemented method for determining control decisions for a vehicle according to various embodiments.

DETAILED DESCRIPTION

In reinforcement learning (RL) training methods (e.g. methods in a policy based family), it may be necessary for agents to specify a probability distribution over actions. During training, the action taken by the agent may be sampled from that probability distribution. On the other hand, a trained agent whose behavior is chosen stochastically at each moment in time may appear jittery. In order to achieve good results in the agent evaluation phase (i.e. testing the performance of already trained agents), the testing conditions should be as similar to the training condition as possible. Therefore it may not be advisable to simply choose the argmax of the possible actions during the evaluation phase (e.g. suppose that during the training phase, agent takes decision every 100 ms, then agent who puts 10 % probability on "Change lane to the left" and 90% probability on "Stay in the lane" changes lane on average every 1 s; on the other hand, if just the argmax decision would be taken, the agent would always stay in the lane).

According to various embodiments, a parametrizable model head may be provided that allows an agent to output a decision probability in a one-dimensional or in a multi-dimensional discrete space, which may allow for exploring low probability strategies and which may be significantly less jittery during the evaluation phase.

In a one-dimensional discrete action space, at each moment in time, the agent has only two options for its decision; for example, the agent can decide to stay in lane or change lane (wherein a further distinction between change lane to left or change lane to right is not provided).

In a multi-dimensional discrete action space, at each moment in time, the agent has several options for its decision; for example, the agent can decide to stay in lane, change lane left or change lane right.

For application to a multi-dimensional discrete action space, two different model head variants may be provided: in one variant the accumulator for a particular action resets only when this action was taken, in the other variant, the accumulators for all actions reset when any action is taken.

According to various embodiments, a model head is provided that utilizes an accumulator to allow for consistent exploration of small probability strategies between training and evaluation phases without agent appearing jittery (in 1D discrete action space or in multidimensional discrete action space). A model head may be understood as a module that provides further processing to the output of a machine learning method, for example of an artificial neural network.

The methods and systems according to various embodiments may easily be implemented within the neural network, allowing for efficient gradient propagation. Without the accumulator value according to various embodiments, the neural network would consist only of the part that outputs x0. According to various embodiments, an additional module may be added that operates on this output x0 and that updates the accumulator. However, this module may not contain any learnable parameters. In practice, the methods and systems according to various embodiments may be implemented as a bigger neural network that contains both the network outputting x0, and the module for updating the accumulator.

According to various embodiments, at each point of time, the probability of taking an action may be either very close to 1 or very close to 0, and for the application to multidimensional discrete action space, moreover only one action may have non-negligible probability, so that the agent does not appear jittery.

According to various embodiments, the accumulator may be updated according to a mathematical formula that automatically resets the accumulator when the action is taken (for the application to multidimensional discrete action space, this may depending on the variant: either when that particular action is taken, or when any action is taken).

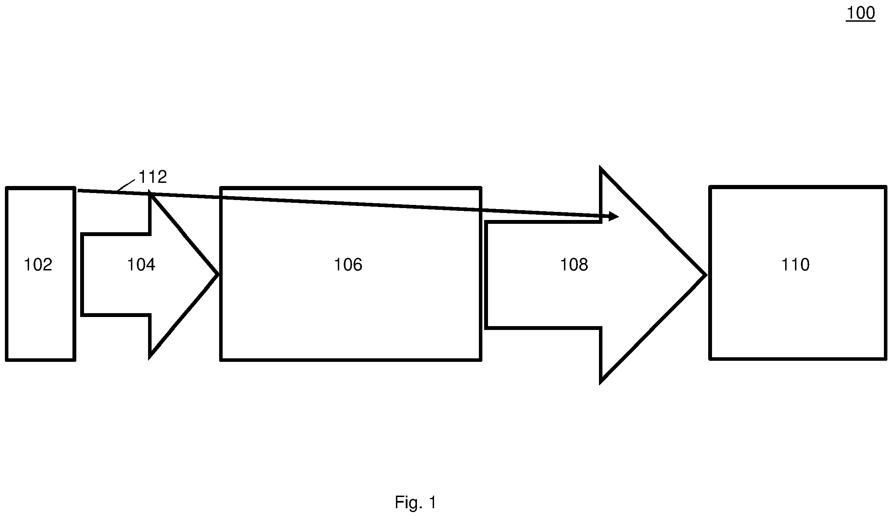

Fig. 1 shows an illustration 100 of updating an accumulator according to various embodiments. At 102, an output from a machine learning method may be acquired. At 104, the output may be preprocessed. At 106, the accumulator value may be updated. At 108, the accumulator and the output from the machine learning method may be used to determine a probability distribution. At 110, the probability distribution may be further processed and passed to decision sampling. Arrow 112 represents an additional path for gradient propagation. This may represent the addition "+gamma*tanh(x0)", where gamma may be a scalar so small that it enables gradient propagation, but the addition itself may have negligible impact on the output probability distribution.

The model head may include one or more of blocks 104, 106, 108, and 110, as shown in Fig. 1.

The model head may take as input the output of the previous part of the network (which may be referred to as $x_0$), may utilize a hidden state accumulator (which may also be referred to as accumulator or as accumulator value, and which may be denoted by $A_i$ in the i-th simulation episode) and may outputs y, which may be interpreted as the probability of taking action (and which represents a probability distribution over the one or more possible actions).

In the following, an embodiment for a one-dimensional discrete action space will be described.

At 102, the network may output $x_0$.

At 104, x may be determined as follows: $x = M * \tanh(x_0)$.

At 106, the accumulator A may be updated as follows:

$$A_{i+1} = A_i * (1\text{-alpha}) + \text{alpha} * x - \text{sigmoid}(\text{beta}*(A_i\text{-}1))*A_i*(1\text{-alpha}).$$

At 108, y may be determined as follows: $y = \text{sigmoid}(\text{beta} * A_i\text{-}1)) + \text{gamma} * \tanh(x_0)$.

At 110, y may be passed to the decision sampling process.

M may be a parameter that allows parametrizing how much the agent can influence the decision accumulator in a single round.

The parameter alpha may parametrize the trade-off between the agent being able to act quickly and not being wiggly.

The parameter beta may parametrize how discrete is the sigmoid(y) passed to the sampling process (i.e. how squashed the sigmoid is). For example, with beta=10^6, the final output passed to the sampling process would almost always be 0 or 1.

The parameter gamma may allow for easier gradient propagation. gamma may be very small, e.g. gamma=$10^{-3}$, so that this term allows for gradient propagation, albeit has negligible influence on action probability).

According to various embodiments, some activity regularizer may be added on the output of the accumulator, in order to promote standard behaviour (e.g. agent should ride without making turns as its base case). Such activity regularizer may be an additional term added to the neural network loss function which penalizes values of the accumulator other than 0.

The accumulator may be self-resetting. After y=1 (taking the decision) is passed further, the hidden state of the accumulator may reset.

The baseline value function used when calculating advantage should take into account the state of the accumulator (to make the actions better distinguishable from the perspective of the agent). It will be understood that the baseline value function, which may also be referred to as state value function, may describe the expected value (including all the future discounted rewards) of a particular state under a specific policy. Advantage may refer to the difference between the value of taking a particular action in the state (state-action value function) and the state value function of the state.

In the following, an embodiment for a multi-dimensional discrete action space wherein the accumulator for a specific action resets only when that specific action is taken will be described. Steps and variables which are not described in more detail may be identical or similar to the embodiment for a one-dimensional discrete action space as described above.

At 102, the network may output $x_0$.

At 104, x may be determined as follows: x = M * tanh($x_0$); x = x.append((10*M/alpha)).

At 106, the accumulator A may be updated as follows:

$$A_{i+1} = A_i * (1\text{-alpha})\text{+alpha} * x - \text{softmax(sigmoid(beta*}(A_i\text{-1}))\text{*(1+c)*}A_i\text{*(1-alpha))}.$$

At 108, y may be determined as follows: y = sigmoid (beta * $A_i$-1))*(1+c)+gamma*tanh($x_0$).

At 110, the softmax of y may be determined (for example as y=softmax(y)) and may be passed to the decision sampling process.

In this embodiment, the accumulator for a specific action may be reset if and only if that action was taken.

$x_0$,x, y, c, and $A_i$ are may be vectors. H, M, alpha, beta and gamma may be scalars. * may denote elementwise multiplication

$A_i$, and y may be vectors whose length equals the number of possible actions, $x_0$ may be a vector that is one element shorter than the action space (since it lacks the default action).

H may be a parameter that describes the strictness of preference for actions. Supposing that the values of accumulators for action 0 and action 1 are both high enough to take the action, however only one action may be taken in one round. Supposing moreover, that in such cases action 0 is preferred. Then the parameter H may describe how many more times is the system more likely to choose action 0 over 1.

It is to be noted that value 10*M/alpha is appended to the vector x. This may represent the default action, which may be taken when no other action is chosen by the network.

The vector c may represent the action priority. In this embodiment, priority ordering among actions does not need to be strict (apart from the default action which should have strictly lowest priority). This priority ordering may be used only in cases when the agent wants to use two or more actions at the same time.

The vector c may be constructed in the following way: Assume that there are N actions to choose from (with an integer number N). Further assuming that it is desired that the probability of choosing the higher priority action is at least H times higher than the probability of choosing a lower priority action. Let the i-th action be the j-th priority action (wherein 0-th priority action is the highest priority action), then: c[i]=(N-j)*log(H). The default action may have lowest priority (N-1). Such a choice of c may assure that in case more than one action accumulator value is high enough to take the action, the most preferred action is taken with probability at least H times bigger than the next most preferred action.

In the following, an embodiment for a multi-dimensional discrete action space wherein the accumulators for all actions resets after any action is taken will be described. Steps and variables which are not described in more detail may be identical or similar to the embodiment for a one-dimensional discrete action space as described above or the embodiment for a multi-dimensional discrete action space wherein the accumulator for a specific action resets only when that specific action is taken.

At 102, the network may output $x_0$.

At 104, x may be determined as follows: $x = M * \tanh(x_0)$.

At 106, the accumulator A may be updated as follows:

$$A_{i+1} = A_i * (1-alpha)+alpha * x - max(sigmoid(beta*(A_i-1)))*A_i*(1-alpha).$$

At 108,y may be determined as follows: $y = A_i - 1$; y=y.append(10*M); y = sigmoid (beta * y)*(1+c)+gamma*tanh($x_0$).

At 110, the softmax of y may be determined (for example as y=softmax(y)) and may be passed to the decision sampling process.

In this embodiment, the accumulator for each action may be reset if and only if a non-default action was taken.

It is to be noted that value 10*M is appended to the vector y. This may represent the default action, which may be taken when no other action is chosen by the network.

The vector c may represent the action priority as described above. In this embodiments, strict priority ordering may be provided among actions.

In the following, a further embodiment will be described.

It may be assumed that there are n network outputs and n+1 actions that the agent can take (with 1 default action). n may be an integer number. The set of real numbers may be denoted by **R.**

The word "input" may be used to denote the very first input as specified below.

The input may be the output of a previous part of the neural network (i.e. the part of the network that contains trainable parameters as illustrated by 102 in Fig. 1) and may be a vector.

The following steps may be carried out:

Step 1: If it is the first round of device operation, the accumulator vector (in $\mathbf{R}^n$) may be initialized, so that each value is in range [-c,c], where c may be a positive real number. It will be understood that the specific way that the parameter c is chosen does not matter; however, it may be desired that the parameter c is fixed beforehand (for example, the image of the function from step 2.1 should be restricted to [-c,c]^n.)

Step 2.1: The first step of accumulator update may be performed as follows: Apply a function $\mathbf{R}^n x \mathbf{R}^n -> \mathbf{R}^n$ to the input-accumulator state pair. It is preferred that the function is differentiable. It is preferred that the function is monotonically increasing with the value of the accumulator (elementwise). It is preferred that the function is monotonic in the model input. It is preferred that the image of the function is restricted to the range [-c,c]^n. An example for such a function may be f(x,y)=c*tanh(x+y).

Step 2.2 The accumulator state may be passed to part A of the decision choice module as follows: In part A of the decision module, a differentiable function [-c,c]^n ->R^{n+1} may be applied to the accumulator state. For example, let x be an n dimensional input, then the output of the function may be an n+1 dimensional vector y, where the first n elements are softmax(x), and the n+1st element may always equal 1e-3 (=$10^{-3}$ = 0.001). It may be desired that the first n outputs of the function are elementwise monotonically increasing with the first n inputs of the function. It may be desired that the n+1st output of the function is a predetermined real value. Let k be an integer in [1 ,n]. Then the maximal value of the k+1st output may be strictly smaller than the maximal value of the kth output.

Part A of the decision choice module may deal with updating the accumulator, and part B may assure that the outputs of the decision module are in a predetermined range, for example [0,1].

Step 2.3: The output of the part A of the decision choice module may be passed to part B of the decision choice module as follows: In part B of the decision module, a differentiable function $R^{n+1} -> [0,1]^{n+1}$ may be applied. The function may be elementwise monotonically increasing.

A parameter H may describe one of the conditions that the function from step 2.3 must satisfy. Let H be some predetermined real number greater than 1. Then for any i in [1 ,n+1] and any j in [1 ,n+1], if the ith input is strictly bigger than jth input, then the ith output should be at least H times bigger than the jth output. The sum of all outputs must equal 1.

Step 2.4: The second step of accumulator update may be performed. Two options may be provided for this update. As a first option, the output of the step 2.1 may be taken and the result may be multiplied by the first n outputs of step 2.3 (elementwise), and the resulting vector may be subtracted from the accumulator state. As a second option, the output of the step 2.1 may be multiplied by the biggest of the first n outputs of step 2.3. The result of the multiplication may be subtracted from the accumulator. In the first option, this may reset the accumulator for a particular action if it was taken, in the second option, it may reset the accumulators for all actions if any action was taken.

Step 3: the action may be sampled from the output of step 2.3.

It will be understood that complex numbers may be used instead of real numbers in steps 1, 2 and 3, and that the imaginary part may be discarded when taking final action).

In step 2.1, a function $R^n \times R^n \to R^n$ may be used. One input to this function may be the output of the artificial neural network (which may be a vector in $R^n$), and another input may be the state of the accumulators (also a vector in $R^n$).

According to various embodiments, as described herein, one or more accumulators may be provided that self-reset after taking action.

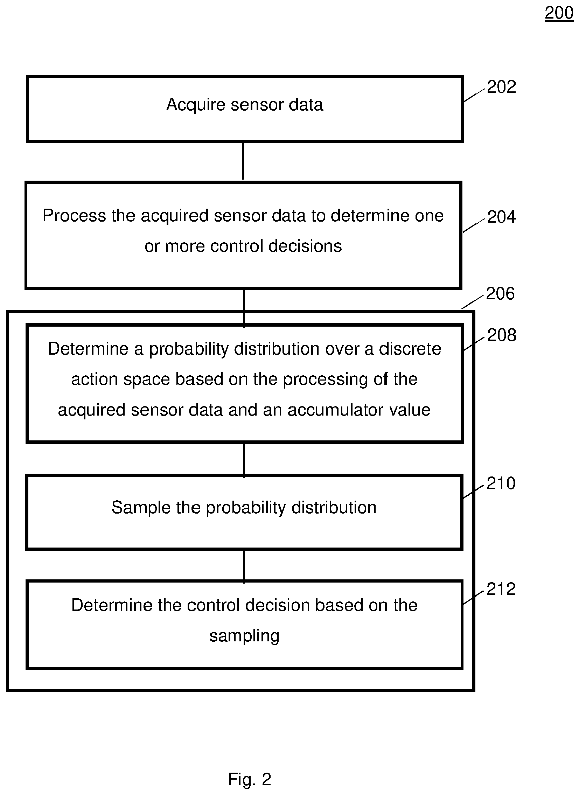

Fig. 2 shows a flow diagram illustrating a method for determining control decisions for a vehicle according to various embodiments. At 202, sensor data may be acquired. At 204, the acquired sensor data may be processed to determine one or more control decision (as illustrated by block 206) . Determining 206 the one or more control decisions may include the substeps 208, 210, and 212, as will be described in the following. At 208, a probability distribution over a discrete action space may be determined based on the processing of the acquired sensor data and an accumulator value. The accumulator value may be indicative of control decisions taken in the past. At 210, the probability distribution may be sampled. At 212, the control decision may be determined based on the sampling. The accumulator value may be updated based on the probability distribution and/or the determined control decision.

According to various embodiments, the discrete action space may include or may be a set of possible actions to be taken by the vehicle.

According to various embodiments, the set of possible actions may include a change lane to left action and/or a change lane to right action, and/or a hold lane action.

According to various embodiments, the control decision may include or may be a binary decision.

According to various embodiments, the control decision may include or may be a decision with more than two options.

According to various embodiments, the accumulator value may be reset if a pre-determined decision is taken.

According to various embodiments, the accumulator value may be reset if any decision is taken.

According to various embodiments, the acquired sensor data may be processed to determine one or more control decisions using an artificial neural network, and the accumulator value may be updated using the artificial neural network.

According to various embodiments, the acquired sensor data may be processed to determine one or more control decisions using an artificial neural network, and the accumulator value may be updated outside the artificial neural network.

According to various embodiments, the accumulator value may be updated in a two-stage approach, wherein a first stage of updating the accumulator value is carried out before determining the decision, and wherein a second stage of updating the accumulator value is carried out after determining the decision.

According to various embodiments, the accumulator value may be updated based on determining at least one accumulator value for a pre-determined time step based on the at least one accumulator value for a time step before the pre-determined time step and based on the probability distribution.

According to various embodiments, the control decisions may be related to functionality of an advanced driver-assistance system of the vehicle.

Each of the steps 202, 204, 206, 208 and the further steps described above may be performed by computer hardware components.

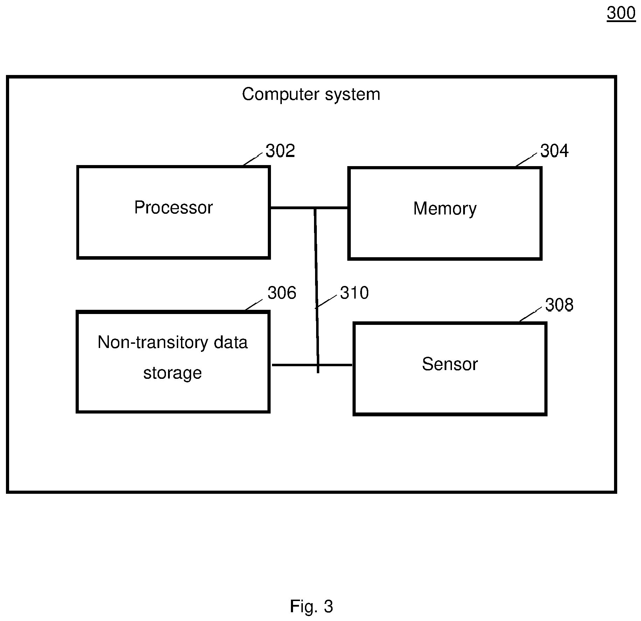

Fig. 3 shows a computer system 300 with a plurality of computer hardware components configured to carry out steps of a computer implemented method for determining control decisions for a vehicle according to various embodiments. The computer system 300 may include a processor 302, a memory 304, and a non-transitory data storage 306. A sensor 308 may be provided as part of the computer system 300 (like illustrated in Fig. 3), or may be provided external to the computer system 300.

The processor 302 may carry out instructions provided in the memory 304. The non-transitory data storage 306 may store a computer program, including the instructions that may be transferred to the memory 304 and then executed by the processor 302. The sensor 308 may be used for acquiring data which may then be used as an input to the artificial neural network.

The processor 302, the memory 304, and the non-transitory data storage 306 may be coupled with each other, e.g. via an electrical connection 310, such as e.g. a cable or a computer bus or via any other suitable electrical connection to exchange electrical signals. The sensor 308 may be coupled to the computer system 300, for example via an external interface, or may be provided as parts of the computer system (in other words: internal to the computer system, for example coupled via the electrical connection 310).

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for computer system 300.

The methods and systems according to various embodiments may solve the problem of the agent appearing jittery during the evaluation phase, while at the same time allowing for consistent exploration of small probability strategies.

Reference numeral list

| 100 | illustration of updating an accumulator according to various embodiments |
| 102 | step of acquiring an output from a machine learning method |
| 104 | step of preprocessing the output |
| 106 | step of updating the accumulator value |
| 108 | step of using the accumulator and the output from the machine learning method to determine a probability distribution |
| 110 | step of further processing the probability distribution and passing to decision sampling |
| 112 | arrow |

| 200 | flow diagram illustrating a method for determining control decisions for a vehicle according to various embodiments |
| 202 | step of acquiring sensor data |
| 204 | step of processing the acquired sensor data to determine one or more control decisions |
| 206 | determining one or more control decisions |
| 208 | step of determining a probability distribution over a discrete action space based on the processing of the acquired sensor data and an accumulator value |
| 210 | step of sampling the probability distribution |
| 212 | step of determining the control decision based on the sampling |

| 300 | computer system according to various embodiments |
| 302 | processor |
| 304 | memory |
| 306 | non-transitory data storage |
| 308 | sensor |
| 310 | connection |

**Claims**

1. Computer implemented method for determining control decisions for a vehicle,
   the method comprising the following steps carried out by computer hardware components:

   - acquiring (202) sensor data;
   - processing (204) the acquired sensor data to determine (206) one or more control decisions;
   - wherein determining (206) the one or more control decisions comprises:

     - determining (208) a probability distribution over a discrete action space based on the processing of the acquired sensor data and an accumulator value, wherein the accumulator value is indicative of control decisions taken in the past;
     - sampling (210) the probability distribution; and
     - determining (212) the control decision based on the sampling;

   wherein the accumulator value is updated based on the probability distribution and/or the determined control decision.

2. The computer implemented method of claim 1,
   wherein the discrete action space comprises a set of possible actions to be taken by the vehicle.

3. The computer implemented method of claim 2,

wherein the set of possible actions comprises a change lane to left action, a change lane to right action, and a hold lane action.

4. The computer implemented method of at least one of claims 1 to 3, wherein the control decision comprises a binary decision.

5. The computer implemented method of at least one of claims 1 to 4, wherein the control decision comprises a decision with more than two options.

6. The computer implemented method of at least one of claims 1 to 5, wherein the accumulator value is reset if a pre-determined decision is taken.

7. The computer implemented method of at least one of claims 1 to 6, wherein the accumulator value is reset if any decision is taken.

8. The computer implemented method of at least one of claims 1 to 7,

   wherein the acquired sensor data are processed to determine one or more control decisions using an artificial neural network; and
   wherein the accumulator value is updated using the artificial neural network.

9. The computer implemented method of at least one of claims 1 to 7,

   wherein the acquired sensor data are processed to determine one or more control decisions using an artificial neural network; and
   wherein the accumulator value is updated outside the artificial neural network.

10. The computer implemented method of at least one of claims 1 to 9, wherein the accumulator value is updated in a two-stage approach, wherein a first stage of updating the accumulator value is carried out before determining the decision, and wherein a second stage of updating the accumulator value is carried out after determining the decision.

11. The computer implemented method of at least one of claims 1 to 10,
    wherein the accumulator value is updated based on determining at least one accumulator value for a pre-determined time step based on the at least one accumulator value for a time step before the pre-determined time step and based on the probability distribution.

12. The computer implemented method of claim 11,
    wherein the control decisions are related to functionality of an advanced driver-assistance system of the vehicle.

13. Computer system (300), the computer system (300) comprising a plurality of computer hardware components configured to carry out steps of the computer implemented method of at least one of claims 1 to 12.

14. Vehicle comprising the computer system (300) of claim 13 and a sensor (308) configured to generate the sensor data.

15. Non-transitory computer readable medium comprising instructions for carrying out the computer implemented method of at least one of claims 1 to 12.

100

102

104

106

108

110

112

Fig. 1

200

Fig. 2

300

Computer system

```
            302                              304
┌─────────────────────┐       ┌─────────────────────┐
│                     │       │                     │
│     Processor       │───┬───│      Memory         │
│                     │   │   │                     │
└─────────────────────┘   │   └─────────────────────┘

            306          310               308
┌─────────────────────┐   │   ┌─────────────────────┐
│                     │   │   │                     │
│ Non-transitory data │───┴───│      Sensor         │
│      storage        │       │                     │
└─────────────────────┘       └─────────────────────┘
```

Fig. 3

## EUROPEAN SEARCH REPORT

Application Number

EP 22 20 7703

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/394562 A1 (NONAKA RYOSUKE [JP] ET AL) 17 December 2020 (2020-12-17) * paragraph [0022] – paragraph [0165]; figures 1-16 * | 1-15 | INV. G06N3/0442 G06N3/092 |
| A | DEWA CHANDRA KUSUMA ET AL: "Integrating Multiple Policies for Person-Following Robot Training Using Deep Reinforcement Learning", IEEE ACCESS, IEEE, USA, vol. 9, 21 May 2021 (2021-05-21), pages 75526-75541, XP011856614, DOI: 10.1109/ACCESS.2021.3082136 [retrieved on 2021-05-24] * the whole document * | 1-15 | |
| A | US 2020/139973 A1 (PALANISAMY PRAVEEN [US] ET AL) 7 May 2020 (2020-05-07) * the whole document * | 1-15 | |

TECHNICAL FIELDS
SEARCHED      (IPC)

G06N
B60W
G08G

The present search report has been drawn up for all claims

| Place of search | Date of completion of the search | Examiner |
|---|---|---|
| The Hague | 3 April 2023 | Jacobs, Jan-Pieter |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

......................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 20 7703

This annex lists the patent family members relating to the patent documents cited in the above-mentioned European search report.
The members are as contained in the European Patent Office EDP file on
The European Patent Office is in no way liable for these particulars which are merely given for the purpose of information.

03-04-2023

| Patent document cited in search report | | Publication date | Patent family member(s) | | Publication date |
|---|---|---|---|---|---|
| US 2020394562 | A1 | 17-12-2020 | JP | 7128152 B2 | 30-08-2022 |
| | | | JP | 2020204803 A | 24-12-2020 |
| | | | US | 2020394562 A1 | 17-12-2020 |
| US 2020139973 | A1 | 07-05-2020 | CN | 111137292 A | 12-05-2020 |
| | | | DE | 102019115707 A1 | 07-05-2020 |
| | | | US | 2020139973 A1 | 07-05-2020 |

EPO FORM P0459

For more details about this annex : see Official Journal of the European Patent Office, No. 12/82